# FASCICULE DE BREVET EUROPEEN

(11) **EP 1 291 531 B1**
(45) Date de publication et mention de la délivrance du brevet: **22.06.2005**
(21) Numéro de dépôt: 02292112.6
(22) Date de dépôt: 28.08.2002
(51) Int. Cl.: F15B 13/00

(54) **Ilot de modules pneumatiques**
Anordnung von Pneumatikmodulen
Pneumatic modules assembly

(30) Priorité: 05.09.2001 FR 0111457
(43) Date de publication de la demande: 12.03.2003
(73) Titulaire: Parker Hannifin France S.A.S., 74100 Ville la Grand (FR)
(72) Inventeur: Rondreux, Serge, 27930 Guichainville (FR); Burban, Jean-Luc, 95220 Herblay (FR); Bouteille, Daniel, 78220 Viroflay (FR)
(74) Mandataire: Robert, Jean-Pierre

(56) Documents cités:
- EP-A- 0 471 950
- EP-A- 0 959 280
- FR-A- 1 462 820
- US-A- 4 934 411

## Description

La présente invention concerne l'assemblage en îlot de modules pneumatiques comme par exemple des modules de distribution.

Il est connu dans le domaine de l'alimentation commandée d'actionneurs pneumatiques (vérins, moteurs...) d'utiliser des distributeurs pilotés intercalés entre un conduit commun d'alimentation fluide sous pression, un conduit commun de collecte de l'échappement et les actionneurs, ces distributeurs étant regroupés en îlot de modules juxtaposés, chaque module comprenant une embase traversée par les conduits communs et surmontée d'un distributeur associé à une électrovanne de pilotage.

Dans chaque embase, il existe donc au moins un tronçon des conduits communs qui s'étend entre des faces opposées planes de l'embase par lesquelles elle est associée aux embases des modules adjacents avec entre chacune d'elles, des éléments d'étanchéité. Le maintien en une seule unité d'un îlot de modules est assuré généralement par des tirants d'assemblage (deux tirants) qui traversent les embases perpendiculairement à leurs faces d'association en même temps qu'au moins un module d'extrémité assurant notamment la fonction de connexion de l'îlot au réseau pneumatique environnant.

L'inconvénient de ces tirants d'assemblage réside dans la nécessité d'ajuster leurs longueurs à celle de l'îlot à constituer qui, par définition, est variable puisque fonction du nombre de modules qu'il contient, un module pouvant prendre en outre plusieurs dimensions dans le sens de ces tirants d'assemblage.

En outre les îlots de ce type ont pour intérêt une capacité à être rapidement modifiés pour adapter l'installation aux exigences des actionneurs mis en oeuvre et à l'évolution dans le temps de l'installation. Or, modifier la figuration de l'îlot demande de procéder à son désassemblage donc à retirer les deux tirants et à en remettre d'autres adaptés à la dimension nouvelle de l'îlot modifié. Il s'agit là d'un handicap nuisant au caractère flexible et adaptable de ce type d'installation.

Dans le document EP 959 280, on décrit des moyens d'assemblage des embases entre elles indépendants du nombre et de l'épaisseur des embases. En outre ces moyens d'assemblages se réduisent à une seule ligne de serrage ce qui libère un volume intérieur de l'embase qui peut être utilisé à d'autres fins telles que, toutes choses égales par ailleurs, l'augmentation des sections de passage des canaux internes.

De la même manière, l'invention a pour objet un îlot de modules pneumatiques constitué par une pluralité de modules de distribution adjacents, juxtaposés et maintenus serrés les uns contre les autres le long de faces parallèles et entre deux modules d'extrémité par des moyens d'assemblage traversant tous les modules de distribution et au moins l'un des modules d'extrémités, dans lequel les moyens d'assemblage comprennent pour chaque module de distribution une tige traversante avec une première extrémité filetée et une seconde extrémité taraudée et dans lequel des moyens sont prévus pour bloquer et débloquer en rotation chaque tige par rapport au module qu'elle traverse. Cette disposition permet de supprimer l'aléa de la première liaison filetée qui va se désassembler, aléa qui existe dans le dispositif selon EP 959 280.

Ces moyens seront constitués par une tête dont la forme extérieure n'est pas de révolution autour de l'axe de la tige prévue à l'extrémité taraudée de la tige qui, lorsqu'elle est en place, fait saillie à l'extérieur d'une face d'association d'un module, de manière à être reçue par un logement prévu dans la face d'association du module adjacent de forme correspondant à la forme extérieure de la tête de manière à créer un blocage en rotation de la tige par correspondance de formes.

D'autres caractéristiques et avantages de l'invention ressortiront de la description de quelques exemples de réalisation donnés ci-après de manière non limitative. Il sera fait référence aux dessins annexés parmi lesquels :
- la figure 1 est une vue extérieure d'un îlot de modules conforme à l'invention,
- la figure 2 illustre schématiquement le tirant modulaire conforme à l'invention,
- la figure 3 est une vue schématique d'un mode de réalisation préféré des tiges d'assemblages conforme à l'invention dans leur condition de service,
- les figures 4,5,6 et 7 illustrent des variantes de réalisation des moyens d'immobilisation de chaque tige par le module adjacent.

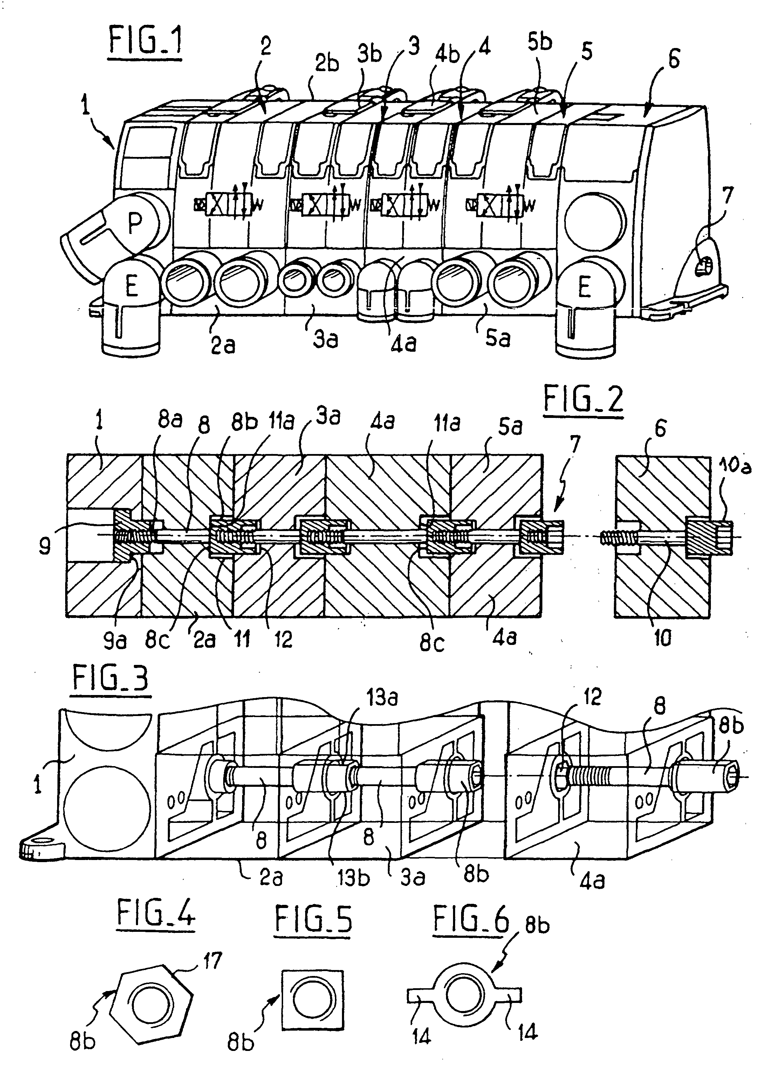

L'îlot pneumatique représenté à la figure 1 comporte de manière connue en soit un premier module d'extrémité 1, des modules de distribution pneumatique 2,3,4,5 et un second module d'extrémité 6. Chaque module de distribution porte une embase 2a,3a, 4a, 5a limitée dans le sens de la longueur du module par des faces parallèles, chaque embase étant surmontée par un ensemble distributeur/électrovanne 2b, 3b, 4b, 5b. Les modules sont maintenus assemblés par des moyens d'assemblages 7 décrit plus en détail au regard des figures suivantes.

A la figure 2 on retrouve schématiquement les embases 2a,3a,4a,5a de module de distribution traversées par les moyens d'assemblage 7. Au niveau de chaque embase de module de distribution les moyens d'assemblage 7 sont formés par une tige 8 dont une extrémité 8a est filetée et dont une autre extrémité 8b, renflée, est taraudée. Ainsi l'extrémité 8b de chaque tige peut recevoir l'extrémité 8a de la tige associée à l'embase adjacente. Le module d'extrémité 1 comporte quant à lui un écrou 9 avec un épaulement 9a pour recevoir une extrémité 8a de tige 8 du module 2 tandis que l'autre module d'extrémité 6 est traversé par une vis 10 pénétrant dans l'extrémité 8b de la tige du module 5 et prenant appui par sa tête 10a sur le module 6 pour serrer l'empilage. Dans l'exemple représenté à la figure 2 chaque tige 8 n'assure aucune fonction de serrage du module qu'elle traverse contre le module précédent. Le serrage de l'empilement est assuré uniquement entre la tête 10a la vis 10 et l'écrou 9 par l'intermédiaire des tiges 8. Dans une autre variante qui sera décrite ci-dessous, chaque tige 8 jouent le rôle d'une vis de serrage du module qu'elle traverse contre le module précédent.

On remarquera sur la figure 2 que chaque partie renflée 8b ou tête de tige pénètre au moins partiellement dans un logement 11 du module qu'elle traverse. La tête 8b est normalement libre en rotation dans le logement 11. Toutefois, selon l'invention, il est utile, après avoir vissé la tige 8 à la tige précédente de bloquer la tige en rotation.

D'une manière préférée, ce blocage en rotation de chaque tige est constitué par une partie de la tête 8b qui est en saillie de la face d'association du module qu'elle traverse et par un logement 12 du module adjacent qui reçoit cette partie de la tête 8b. Cette partie en saillie de la tête 8b - même toute la tête 8b- possède une surface extérieure qui n'est pas de révolution autour de l'axe de la tige 8. Le logement 12 correspond en forme à cette surface extérieure si bien que lorsque deux modules de distribution sont adjacents l'un de l'autre, la tige 8 du premier est bloquée en rotation par le logement 12 du second qui accommode la partie saillante de la tête 8b.

Un exemple de forme de tête 8b de la tige 8 est représenté à la figure 3. Il s'agit dans ce cas d'une forme cylindrique possédant deux méplats longitudinaux 13a et 13b. Sur cette figure on voit que le logement 12 d'un module par exemple le module 4 possède un contour identique au contour de la section de la tête 8b de chaque tige 8. On notera que l'écrou 9 pourrait également, bien que non représenté, posséder une partie saillante au-delà de la face d'association du module 1 au module 2, de même forme que la tête 8b de chacune des tiges 8.

Aux figures 4, 5 et 6 on voit différents contours possibles de la tête 8b pouvant coopérer avec des logements 12 de forme similaire. Pour ce qui concerne la figure 6 la tête 8b représentée comporte deux ailettes 14 qui permettraient la manoeuvre manuelle de la tige 8 pour son vissage dans la tige précédente les ailettes 14 restant à l'extérieur de la face d'association du module traversé par cette tige.

Le mode de réalisation préféré de l'invention est tel que chaque tige 8 constitue une vis de serrage du module qu'elle traverse sur le module adjacent. A cet effet, chaque tête 8b définit un épaulement radial 8c tourné vers l'extrémité filetée et distant du bout de cette extrémité filetée 8a d'une longueur telle que la tige 8 agit comme une vis de serrage du module qu'elle traverse contre le module adjacent. A cet effet l'épaulement radial 8c prend appui sur le fond 11a du logement 11 avant, bien entendu, que le filetage soit bloqué à fond dans le taraudage de la tige précédente (ou de l'écrou de module d'extrémité 1). Cette disposition est illustrée sur la figure 2 au niveau de la tige-vis 8 traversant le module de distribution 2.

Afin de procéder à chacun des serrages ou desserrages, la tête 8b présente en amont de son taraudage une ouverture à six pans creux pour la mise en place d'une clef de manoeuvre. Il peut également s'agir d'une surface extérieure 17 à six pans comme représentée à la figure 4, d'un carré comme représenté à la figure 5 ou des ailettes 14 déjà décrites.

On notera que dans ce cas, lors de la nécessaire indexation de la position de la tête 8b autour de l'axe de la tige, on agit sur le caractère plus ou moins serré de l'assemblage. Grâce à l'élasticité de celui-ci dans le sens de son serrage, du fait des joints entre modules notamment, et à un pas de filet suffisamment petit, on peut, sans nuire à la qualité du serrage, procéder à une modification importante de l'orientation de la tête.

On comprend que lors du désassemblage d'un module ainsi assemblé, la manoeuvre de la vis 10 ne peut conduire qu'à la séparation du module 6 du module 5. En effet aucune des tiges 8 ne peut être entraînée aléatoirement en rotation par la tige 10 puisque chacune est arrêtée en rotation. Le module 6 étant dissocié, la tige 8 du module 5 est alors accessible et libre de tourner à l'intérieur du module 5 qu'elle traverse pour se désaccoupler de la tige 8 du module 4 et ainsi de suite. Le désassemblage d'un îlot pour en modifier la configuration par exemple, est alors réalisé de manière ordonnée module après module.

## Revendications

1. Ilot de modules pneumatiques constitué par une pluralité de modules (2,3,4,5) de distribution adjacents, juxtaposés et maintenus serrés les uns contre les autres le long de faces parallèles et entre deux modules (1,6) d'extrémité par des moyens d'assemblage (7) traversant tous les modules de distribution et au moins l'un des modules(6) d'extrémité et comprenant pour chaque module de distribution une seule tige traversante (8) avec une première extrémité (8a) filetée et une seconde extrémité (8b) taraudée, **caractérisé en ce que** l'extrémité taraudée (8b) de chaque tige (8) est conformée en une tête dont la surface extérieure n'est pas de révolution autour de l'axe de la tige (8) et qui, en service, est au moins partiellement en saillie d'une face du module traversée par la tige (8) et **en ce que** la face du module adjacent tournée vers la tête (8b) possède un logement (12) en correspondance de forme avec la tête (8b) susdite de manière à créer un blocage en rotation de la tige.

2. Ilot selon la revendication 1, **caractérisé en ce que** la tige (8) comporte du côté de son extrémité taraudée (8b) une surface radiale (8c) pour son appui sur le module qu'elle traverse.

3. Ilot selon l'une des revendications précédentes, **caractérisé en ce que** la tête (8b) comporte des moyens (17) de sa manoeuvre en rotation par une clef.

4. Ilot selon l'une des revendications précédentes, **caractérisé en ce qu'**un des modules (1) d'extrémité est pourvue d'un insert (9) de vissage de l'extrémité de la tige (8) traversant le module de distribution immédiatement adjacent.

5. Ilot selon l'une des revendications précédentes, **caractérisé en ce que** la tige (10) traversant l'autre module d'extrémité (6) est pourvue d'une tête (10a) de serrage.

## Patentansprüche

1. Pneumatikmodulblock, der aus einer Vielzahl von aneinander angrenzenden Verteilermodulen (2, 3, 4, 5) gebildet ist, die nebeneinander angeordnet sind und entlang paralleler Flächen und zwischen zwei Stirnmodulen (1, 6) durch Montagemittel (7) zusammengespannt werden, die alle Verteilermodule und mindestens eines der Stirnmodule (6) durchsetzen und für jedes Verteilermodul eine einzelne Querstange (8) mit einem ersten, mit einem Außengewinde versehenen Ende (8a) und einem zweiten, mit einem Innengewinde versehenen Ende (8b) umfassen, **dadurch gekennzeichnet, dass** das mit einem Innengewinde versehene Ende (8b) jeder Stange (8) zu einem Kopf geformt ist, dessen Außenfläche keine Rotationsfläche um die Achse der Stange (8) ist und der im Betrieb zumindest teilweise von einer Fläche des Moduls absteht, die von der Stange (8) durchsetzt wird, und dass die Fläche des angrenzenden Moduls, die zum Kopf (8b) gerichtet ist, eine Aufnahme (12) besitzt, deren Form dem oben genannten Kopf (8b) entspricht, derart, dass eine Rotationssperre für die Stange erzeugt wird.

2. Block nach Anspruch 1, **dadurch gekennzeichnet, dass** die Stange (8) auf der Seite ihres mit einem Innengewinde versehenen Endes (8b) eine radiale Oberfläche (8c) für ihre Anlage an dem Modul hat, das sie durchsetzt.

3. Block nach einem der vorhergehenden Ansprüche, **dadurch gekennzeichnet, dass** der Kopf (8b) Mittel (17) für seine Drehbewegung mittels eines Schlüssels hat.

4. Block nach einem der vorhergehenden Ansprüche, **dadurch gekennzeichnet, dass** eines der Stirnmodule (1) mit einem Einsatz (9) zum Einschrauben des Endes der Stange (8) versehen ist, die das direkt angrenzende Verteilermodul durchsetzt.

5. Block nach einem der vorhergehenden Ansprüche, **dadurch gekennzeichnet, dass** die Stange (10), die das andere Stirnmodul (6) durchsetzt, mit einem Spannkopf (10a) versehen ist.

## Claims

1. A block of pneumatic modules including of a plurality of adjacent distribution modules (2, 3, 4, 5), juxtaposed and kept tightened against each other along parallel faces and between two end modules (1, 6) by assembly means (7) passing through all the distribution modules and at least one of the end modules (6), and comprising, for each distribution module, a single through rod (8) with a first externally threaded end (8a) and a second internally threaded end (8b), **characterized in that** the second end (8b) of each rod (8) is shaped as a head whose external surface is not of revolution about the axis of the rod (8) and which, in service, at least partially projects from a face of the module through which the rod (8) passes and **in that** the face of the adjacent module turned towards the head (8b) has a recess (12) corresponding in shape to the above mentioned head (8b) in order to create a rotationally keying of the rod..

2. A block according to claim 1, **characterised in that** the rod (8) has, on the side of its internally threaded end (8b), a radial surface (8c) for its abutment on the module which it passes through.

3. A block according to one of the preceding claims, **characterised in that** the head (8b) has means (17) of manoeuvring it rotationally.

4. A block according to one of the preceding claims, **characterised in that** one of the end modules (1) is provided with an insert (9) for screwing the end of the rod (8) passing through the immediately adjacent distribution module.

5. A block according to one of the preceding claims, **characterised in that** the rod (10) passing through the other end module (6) is provided with a tightening head (10a).
